# EUROPEAN PATENT APPLICATION

(11) **EP 3 885 788 A1**
(43) Date of publication of application: **29.09.2021**
(21) Application number: 21163139.5
(22) Date of filing: 17.03.2021
(51) Int. Cl.: G01S 7/48, G01S 7/481, G01S 7/484, G01S 7/4863, G01S 7/4865, G01S 17/42, G01S 17/894

(54) **RANGE IMAGING APPARATUS AND METHOD OF PERFORMING RANGE IMAGING**

(30) Priority: 25.03.2020 FI 20205296
(71) Applicant: Oulun yliopisto, 90570 Oulu (FI)
(72) Inventor: Kostamovaara, Juha, 90570 Oulu (FI)
(74) Representative: Kolster Oy Ab

(57) **Abstract**

A range imaging apparatus comprises a semiconductor laser transmitter (100), a receiver (102), and a data processing unit (106), a field-of-illumination (150) of the semiconductor transmitter (100) and a field-of-view (152) of the receiver (102) being overlapping. The receiver (102) comprises single photon avalanche detector elements (10) arranged two-dimensionally and operate in a Geiger mode. The semiconductor laser transmitter (100) generates optical pulses (110) repeatedly, a single optical pulse of the optical pulses (110) being output as an optical beam (400) with one or more stripes (402, 404, 406), which are parallel, one above another, and separate from each other. Each of the stripes of optical beams (400), which are reflected from objects (112) within the field-of-view (152), illuminates a detector element configuration (300, 302, 304) of the single photon avalanche detector elements (10). The data processing unit (106) performs, synchronously with the optical pulses (110) repeatedly generated, a selection of single photon avalanche detector elements (10) of the detector element configurations (300 to 304) in response to a generation of an optical pulse (110) that illuminates one or more detector element configurations (300 to 304) with the one or more stripes (402 to 406), and determines values corresponding to time-of-flights of said optical pulse (110) based on electrical signals from the single photon avalanche detector elements (10) of the selection for performing range imaging.

## Description

### Field

The invention relates to a range imaging apparatus and a method of performing range imaging.

### Background

Various applications such as automobile safety devices, laser radars, 3D imaging, laser tomography, time imaging spectroscopy, etc., require optical sources which generate high-power (10W to 1000W) single optical pulses in the picosecond range. The reflections of the optical pulses generated by a laser are detected in a detector for determining timing for the detections. Then, a distance to a target may be determined and its 3D image may be formed on the basis of the timing moments. However, there are shortages in efficiency of the range imaging apparatuses.

### Brief description

The present invention seeks to provide an improvement for the range imaging.

The invention is defined by the independent claims. Embodiments are defined in the dependent claims.

### List of drawings

Example embodiments of the present invention are described below, by way of example only, with reference to the accompanying drawings, in which
Figure 1 illustrates an example of a range imaging apparatus;
Figure 2 illustrates an example of a transmitter of the range imaging apparatus;
Figure 3 illustrates an example of a receiver of the range imaging apparatus;
Figure 4 illustrates an example of a laser and stripes of an optical beam;
Figure 5 illustrates an example of operation of detector elements; and
Figure 6 illustrates of an example of a flow chart of a range imaging method.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain features/structures that have not been specifically mentioned. All combinations of the embodiments are considered possible if their combination does not lead to structural or logical contradiction.

It should be noted that while Figures illustrate various embodiments, they are simplified diagrams that only show some structures and/or functional entities. The connections shown in the Figures may refer to logical or physical connections. It is apparent to a person skilled in the art that the described apparatus may also comprise other functions and structures than those described in Figures and text. It should be appreciated that details of some functions, structures, and the signalling used for measurement and/or controlling are irrelevant to the actual invention. Therefore, they need not be discussed in more detail here.

In the present application, optical radiation refers to electromagnetic radiation at wavelengths between 100 nm to 10 µm. Semiconductor lasers generate typically visible or infrared light. One or more narrow or broad bands of the optical radiation may be utilized. A bandwidth of a semiconductor laser may be less than a few tens of nanometers, a few nanometers, or even less than a nanometer without restricting to this.

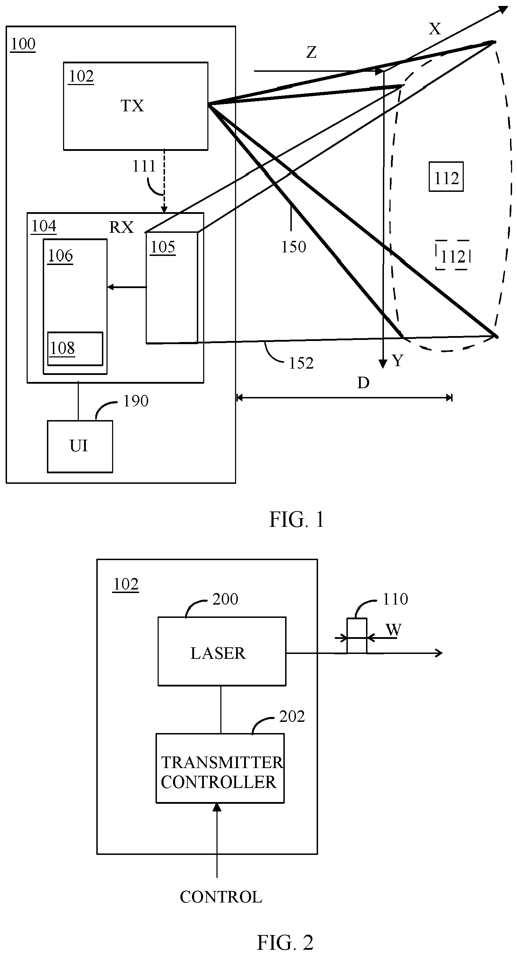

Figure 1 illustrates an example of a block diagram of a range imaging apparatus 100 for performing range imaging. The range imaging apparatus 100 measures distances to one or more objects 112, within an overlapping space of a field-of-illumination 150 and a field-of-view 152 of the range imaging apparatus 100 based on time-of-flights of optical pulses. The field-of-illumination 150 and the field-of-view 152 may be fully overlapping or partially overlapping depending on an optics of the range imaging apparatus 100. The space is illustrated using X, Y and Z axes of 3D coordinates, where a distance D is in a direction of the Z-axis.

The one or more objects 112 reflect at least part of the optical pulse 110 (see Figure 2) transmitted to the field-of-illumination back to a receiver 104. The objects 112 may be cars, furnitures, people, animals, buildings, trees, traffic signs or the like, for example.

The range imaging apparatus 100 may comprise, for example, a pulsed laser distance measuring device or any apparatus capable of measuring a distance by transmitting and receiving at least one optical pulse. In Figures 1 to 3, only the logical elements required for understanding the structure of the range imaging apparatus 100 are shown. Other components or elements have been omitted for reasons of simplicity. It is apparent to a person skilled in the art that range imaging apparatus 100 for forming a 3D range image of the objects 112 may also comprise other functions, components and structures.

The range imaging apparatus 100 comprises a transmitter 102 that may transmit an optical pulse 110 towards the field-of-illumination 150 at each moment of transmission. The range imaging apparatus 100 also comprises the receiver 104 that may receive the optical pulses 110 reflected from the one or more objects 112. A measuring unit 106 of range imaging apparatus 100 may measure a time interval between the transmission and reception for each of the optical pulses 110.

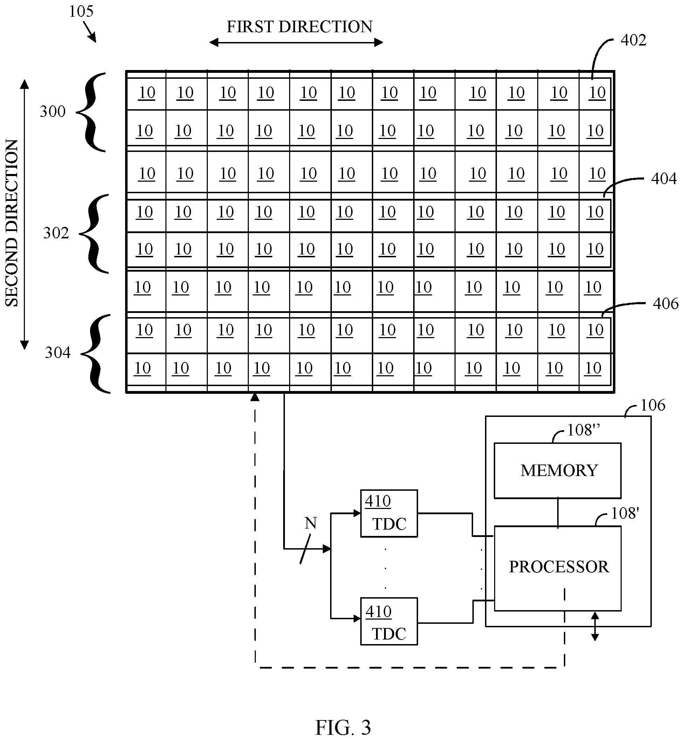

The measuring unit 106 may be a part of the receiver 104 or it may be outside of the receiver 104. The measuring unit 106 comprises time-to-digital converters 410 (see Figure 3). A reception of an optical pulse and its timing may be based on detection of amplitude crossing a predefined amplitude threshold level with respect to a time scale. In general, the reception may be based on any suitable property crossing a predetermined threshold. The determination whether the property crosses the predetermined threshold may be performed digitally or analogically.

The transmitter 102 and the receiver 104 may be connected such that any of the optical pulses 110 transmitted towards the field-of-illumination 150 may also be simultaneously transmitted to the receiver 104 as well (shown also with a dashed line). The optical pulse 110 may be transmitted to the receiver 104 via a mirror, a lens, a prism or the like that directs part of the optical pulse 110 transmitted towards the field-of-illumination to the receiver 104 as a reference pulse 111, or the transmitter 102 may directly transmit another electrical or optical pulse to the receiver 104 as the reference pulse 111. The reference pulse 111 has a determined temporal dependence on the optical pulse transmitted towards the field-of-illumination 150. That is a moment of the transmission of an optical pulse towards the field-of-illumination 150 and it is a timing signal for the measuring unit 106 to start measuring time between the transmission and reception of the optical pulse 110.

The transmitter 102 may transmit optical pulses 110 repeatedly. The repetition of the optical pulses 110 may be regular or irregular. The repetition may have a certain frequency, for example.

The transmitter 102, as shown in Figure 2, comprises a pulsed semiconductor laser 200, which may transmit short optical pulses. The laser may comprise at least one bulk laser, quantum-well laser, vertical-cavity surface-emitting laser (VCSEL). The laser 200 may be an array of the bulk lasers, quantum-well lasers, VCSEL lasers or any combination of them. The duration of the optical pulses 110 may range from a femtoseconds to tens of nanoseconds, for example. As an example, the shortest optical pulse width may be about 50 ps, for example. As an example, the longest optical pulse width may be about 10 ns, for example. The duration of any of the optical pulses 110 may be controllable. A power of the optical pulses 110 may range from one watt to hundreds of watts, for example. As an example, the power of the optical pulse may be about 20 W, for example.

The optical pulses 110 may be of the same length or different lengths. The semiconductor laser 200 may operate in an enhanced gain switching regime for the optical pulses 110 or in a quasi-steady state regime.

The receiver 104 may comprise a detector 105 that detects the optical pulses 110 reflected from the target 112. The detector 105 may also detect the reference pulses 111. The detector 105 may comprise an array of single photon avalanche detector elements 10 (see Figure 3). The receiver 104 may form an image of the one or more objects 112 on the detector 105. The image may be formed with at least one lens and/or at least one curved-surface mirror.

When the receiver 104 receives any of the optical pulses 110 reflected from the one or more objects 112, the moment of the arrival of such an optical pulse 110 may be the time when the detector 105 detects it. A reflected optical pulse from the one or more object 112 on different single photon avalanche detector elements 10 then acts as timing signals for the measuring unit 106 to determine time between the transmission and the reception of the optical pulse for each of the single photon avalanche detector elements 10.

Similarly, a moment of the transmission of the optical pulse 110 from the transmitter 102 may correspondingly be detected by the detector 105 on the basis of the optical or electrical reference pulse 111 received by the receiver 104. However, the reference pulse 111 is common to all single photon avalanche detector elements 10.

As explained, the range imaging apparatus 100 may comprise the measuring unit 106 for measuring the time interval between the transmission and the detection of any one of the optical pulses 110. The detector 105 and the measuring unit 106 may be connected such that the detector 105 may inform the measuring unit 106 about the arrivals of the pulses 110, 111 and the measuring unit 106 may determine their timing.

The measuring unit 106 may comprise or be connected with time-to-digital converters 410 (see Figure 3), a data processing unit 108 provided with suitable software embedded on a computer readable medium, or by separate logic circuits, for example with an application specific integrated circuit (ASIC). The measuring unit 106 may comprise an input/output (I/O) interface, such as a computer port for providing communication and signalling capabilities. The measuring unit 106 may comprise a clock for synchronized operation, timing the detections of optical pulses on the basis of electrical pulses from the detector 105 and measuring time related to transmission and reception moments of optical pulses.

A transmitter controller 202 of the transmitter 102 may receive information about a required duration of the optical pulse 110 and may control a duration W of the optical pulse 110 on the basis of said information. In the prior art, a technical problem is that the field-of-view is illuminated using flood or diffuse illumination, which results in a low irradiance (W/m²). The low irradiance, in turn, results in a poor signal-to-noise ratio in detection.

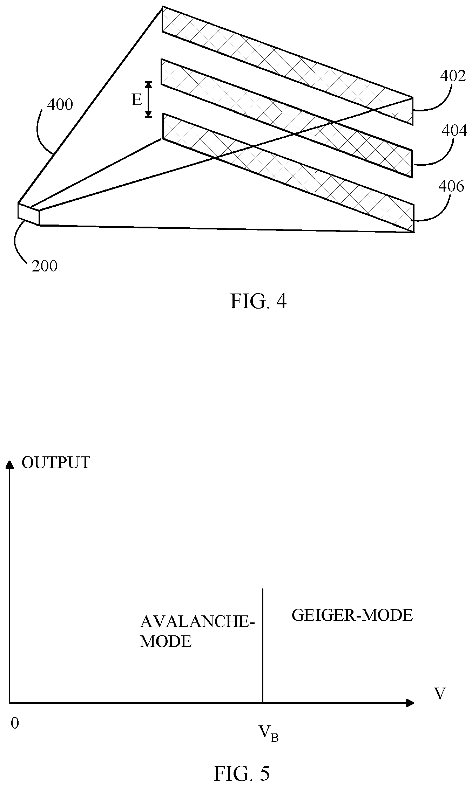

Figure 3 illustrates an example, where the receiver 104 comprises a plurality of single photon avalanche detector elements 10 arranged two-dimensionally and configured to operate in a Geiger mode (see Figure 5).

The semiconductor laser transmitter 200 generates optical pulses 110 repeatedly, and a single optical pulse is output as an optical beam 400 with one or more stripes 402, 404, 406 (see Figure 4). The stripes 402 to 406 are parallel, one above another, and separate from each other. The stripes 402 to 406 may have at least approximately the same length. Centers (middle points) of the stripes 402 to 406 may be connectable with a straight line, and a direction of the line may be vertical to a direction of a longitudinal axis of a stripe 402 to 406. The stripes 402 to 406 are separated from each other in a direction perpendicular to a longitudinal axis of the stripes 402 to 406. That is, if the longitudinal axis is horizontal, the stripes 402 to 406 are separated from each other in a vertical direction.

A single stripe 402 to 406 of an optical beam of the optical beams 400, which are reflected from one or more objects 112 within the field-of-view 152, illuminates a single detector element configuration 300, 302, 304 of the plurality of the single photon avalanche detector elements 10. A detector element configuration 300, 302, 304 has only a fraction of the single photon avalanche detector elements 10 of a total number of the single photon avalanche detector elements 10 of the detector. A detector element configuration 300 to 304 has a same shape as a corresponding stripe 402 to 406. A single strip 402 to 406 illuminates single photon avalanche detector elements 10 of a corresponding single detector element configuration 300 to 304. A single stripe 402 to 406 and a corresponding detector element configuration 300 to 304 are a predetermined pair.

A shape of a detector element configuration 300 to 304 corresponds to that of a corresponding stripe 402 to 406, and hence if a shape of a stripe 402 to 406 is a rectangle, a shape of the corresponding detector element configuration 300 to 304 may also be a rectangle. A detector element configuration 300 to 304 may have any shape as long as an image of a corresponding stripe 402 to 406 has a same shape. In general, a stripe 402 to 406 may have any shape and a corresponding detector element configuration 300 304 may have any shape as long as an image of the stripe 402 to 406 has the same shape as the detector element configuration 300 to 304 at a same location on the single photon avalanche detector elements 10 repeatedly with successive optical pulses. A size of a stripe 402 to 406 and a size of a corresponding detector element configuration 300 to 304 as scaled by the optics of the range imaging apparatus.

In an embodiment, a detector element configuration 300 to 304 may comprise a single row of the single photon avalanche detector elements 10 of the detector. In an embodiment, a detector element configuration 300 to 304 may comprise two or more rows of the single photon avalanche detector elements 10 of the detector (in Figure 3, a single detector element configuration 300 to 304 comprises two rows of the single photon avalanche detector elements 10). A single detector element configuration 300, 302, 304 of the plurality of the single photon avalanche detector elements 10 is an image of a corresponding stripe 402 to 406 on the matrix of the single photon avalanche detector elements 10. Optical systems of the transmitter 102 and the receiver 104 are configured to co-operate in this manner, and a person skilled in the art is familiar with such a co-operation. A number of detector element configurations 300 to 302 and a number of stripes 402 to 406 is the same on the basis of an optical implementation and operation. The stripes 402 to 406 and the detector element configurations 300 to 304 can be matched or associated together by a calibration, for example, before an actual use for distance measurements.

The data processing unit 106 performs synchronously for each of the optical pulses 110 repeatedly generated a selection of single photon avalanche detector elements 10 of one or more of the detector element configurations 300 to 302 in response to generation of a single optical pulse at a single moment. The single optical pulse with a number of stripes 402 to 406 then illuminates the same number of detector element configurations 300 to 304. That is, only the single photon avalanche detector elements 10, which are hit by the stripes 402 to 406, are selected for detection. In other words, only the detector element configurations 300 to 304, which are illuminated by the stripes 402 to 406, are selected for detection. At different moments, the same single photon avalanche detector elements 10 or different single photon avalanche detector elements 10 may be selected depending on which stripes 402 to 406 are transmitted with successive optical pulses 110 corresponding to those different moments.

The stripes 402 to 406 may be output in any order that the detection is made to follow. The stripes 402 to 406 may be output simultaneously, in a certain order or irregularly, and the order may vary optical pulse by optical pulse.

In an embodiment, the single photon avalanche detector elements 10 may be predeterministically selected because it is known beforehand due to optical arrangement between the transmitter 102 and the receiver 104 which stripes 402 to 406 will illuminate which detector element configurations 300 to 304. In other words, the single photon avalanche detector elements 10 may be predeterministically selected because it is known beforehand due to optical arrangement between the transmitter 102 and the receiver 104 which stripes 402 to 406 will illuminate which single photon avalanche detector elements 10.

In an embodiment, the selection of single photon avalanche detector elements 10 may be performed such that those single photon avalanche detector elements 10 that receive light of the at least one stripe at a certain moment will be selected.

In these manners, optical power of each optical pulse can be concentrated to a minimum number of single photon avalanche detector elements 10 which improves irradiance at detection. This, in turn, results in an increase or improvement is a signal-noise-ratio. Because of the detector element configurations 300 to 302 and the stripes 402 to 406 are made to match on an optical basis, the transmitter 102 predetermines the single photon avalanche detector elements 10 that are illuminated by each of the optical pulses 110. Single photon avalanche detector elements 10, which are not illuminated by an optical pulse 110, are not used for a time-of-flight determination in conjunction with that optical pulse.

The data processing unit 106 then determines values corresponding to time-of-flights of said optical pulse 110 based on electrical signals from the single photon avalanche detector elements 10 of the selection for performing range imaging.

Because the single photon avalanche detector elements 10 operate in the Geiger mode, their output is digital in nature because it is in voltage level of digital circuits. That is, their output voltage levels may be set to conform to voltage levels of digital circuits, which allows high measurement speed and accuracy. For example, an inverter may be used to detect such an output from a single photon avalanche detector element 10. Their output also occurs in separate pulses the number of which is easy to count. Namely, the pulses are separated by dead time.

The single photon avalanche detector elements 10 of a matrix of the detector 105 detect each optical pulse 110 which has reflected from the at least one object 112 and which hits the single photon avalanche detector elements 10. Each of the single photon avalanche detector elements 10 outputs an electric signal in response to detection of the optical pulse 110.

In an embodiment, a total number N of time-to-digital converters 410 a same as a total number M of the single photon avalanche detector elements 10.

In an embodiment, the total number N of time-to-digital converters 410 may be smaller than a total number M of the single photon avalanche detector elements 10. That is, the receiver 104 may be made simpler than in a case where every single photon avalanche detector element 10 has its own time-to-digital converter 410. The one or more stripes 402 to 406 of the beam of light hit only a part of the single photon avalanche detector elements 10, which is why it is unnecessary complexity and space consumption to have so many time-to-digital converters 410. However, the total number N of the time-to-digital converters 410 is the same as or higher than a total number ML of the single photon avalanche detector elements 10 of a single detector element configurations 300 to 304.

A data processing unit 108 of the receiver 104 may connect those of the single photon avalanche detector elements 10, which receives the one or more stripes 402 to 406 of a single optical pulse, with different time-to-digital converters 410.

The time-to-digital converters 410 provide timings of the detected optical pulse on the basis of each of the electrical signals from the single photon avalanche detector elements 10 that detected a reflected optical pulse for determination of information on distances of the at least one object 112. In other words, the data processing unit 108 connects a number of the selected single photon avalanche detector elements 10 and the same number of the time-to-digital converters 410 with each other. Each of the determined timings can be considered to refer to a distance between the at least one object 112 and the range imaging apparatus. The determined distances and/or the timings, in turn, may give information on a shape and number of the at least one object 112. In this manner, a three dimensional image of the at least one object 112 may be formed in a processing unit 414 of the range imaging apparatus.

In an embodiment an example of which is illustrated in Figure 3, the data processing unit 108 may comprise one or more processors 108' and one or more memories 108". The one or more memories 108" may include also a computer program code. The one or more memories 108" and the computer program code may, with the one or more processors 108', cause the range imaging apparatus 100 at least to perform all steps required for the range imaging. The data processing unit 108 may control the whole operation of the range imaging apparatus 100.

Figure 4 illustrates an example of the stripes 402 to 406. The stripes 402 to 406 may have a distance E therebetween in a direction perpendicular to a longitudinal axis of the stripes 402 to 406. The distance E maybe the same between any two stripes directly adjacent to each other. Alternatively, the distance E may be different between a first pair of stripes and a second pair of stripes, the first and second pair of stripes being different from each other, stripes of the first pair being directly adjacent to each other, and stripes of the second pair being directly adjacent to each other. A physical quantity of the distance E may be an angle, which may be measured in degrees or radians. A physical quantity of the distance E may be length which may depend on a distance between the range imaging apparatus 100 and the at least one object 112.

Figure 5 presents an avalanche-mode and the Geiger-mode. The single photon avalanche detector elements 10 are made of semiconducting material and have a p-n junction which is reverse biased. In the avalanche-mode, the biasing voltage over the p-n junction is below a breakdown voltage V_{B}. The amplification in the avalanche-mode is the higher the closer the biasing voltage is to the breakdown voltage V_{B}. In the Geiger-mode, the biasing voltage over the p-n junction is above the breakdown voltage V_{B}. In the avalanche-mode, the intensity of the electrical output of the detector elements depends linearly on the optical radiation i.e. the number of detected photons. To make the detection of photons more effective, the Geiger-mode may be used. In the Geiger-mode, the response of the single photon avalanche detector elements 10 to optical radiation is non-linear and a single photon may cause the diode i.e. each single photon avalanche detector element 10 to output a strong electrical pulse. The amplification of single photon avalanche detector elements 10 in the Geiger-mode can be considered infinite which is substantially different from linear amplification of the avalanche-mode.

In an embodiment an example of which is shown in Figure 3, a density of the plurality of the single photon avalanche detector elements 10 in a first direction may determine a resolution of the range imaging in said first direction. A density of the stripes 402 to 406 in a direction perpendicular to a longitudinal direction of the stripes 402 to 406 may determine a resolution of the range imaging in a second direction, the second direction being orthogonal to the first direction on a plane of the matrix of the single photon avalanche detector elements 10. The first direction is parallel to the longitudinal axis of the stripes 402 to 406, and the second direction is orthogonal to the longitudinal axis of the stripes 402 to 406 on the a plane of the matrix of the single photon avalanche detector elements 10. The first direction is parallel to a row of the single photon avalanche detector elements 10, and the second direction is parallel to a column of the single photon avalanche detector elements 10.

In an embodiment an example of which is shown in Figure 3, a density of the plurality of the single photon avalanche detector elements 10 may be higher than a density of the stripes 402 to 402 in the second direction.

In an embodiment an example of which is shown in Figure 3, a detector element configuration of the detector element configurations 300 to 304 may comprise a one-dimensional row of the single photon avalanche detector elements 10.

In an embodiment an example of which is shown in Figure 3, a detector element configuration of the detector element configurations 300 to 304 comprises two or more rows of the single photon avalanche detector elements 10 in a two-dimensional configuration.

In an embodiment, the semiconductor laser transmitter 100 may provide a temporal sequence of the stripes 402 to 406 to the field-of-illumination 150 such that the semiconductor laser transmitter 100 may direct a number of the stripes 402 to 406 to a same number of the detector element configurations 300 to 304 through a reflection from the one or more objects 112 at each step of the sequence. The data processing unit 106 may select, at any step of the sequence, one or more of the detector element configurations 300 to 304 in response to stripes 402 to 406 directed thereon. That is, the number of stripes 402 to 406 and the number of detector element configurations 300 to 304 correspond to each other and their numerical value is equal for each transmitted optical pulse. The number of stripes 402 to 406 may vary optical pulse by optical pulse.

In an embodiment, the semiconductor laser transmitter 100 may direct a number of the stripes 402 to 406 to a same number of the detector element configurations 300 to 304 through a reflection from the one or more objects 112 at each step of the sequence.

In an embodiment, the semiconductor laser transmitter 100 may direct a number H of the stripes 402 to 406 to a same number of the detector element configurations 300 to 304 at at least one moment such that the number H is less than a total number S of stripes 402 to 406. The number of the stripes 402 to 406 is in this example smaller than the total number S of the stripes 402 to 406.

In an embodiment, the semiconductor laser transmitter 100 may output all stripes 402 to 406 at a time as an optical pulse. That is, the semiconductor laser transmitter 100 may output a maximum number MN of stripes 402 to 406 at a time. All stripes 402 to 406 may be output each time an optical pulse is generated or all stripes 402 to 406 may be output regularly or irregularly with respect to the generation of the optical pulses.

In an embodiment, the one or more memories 108" and the computer program code may be configured to, with the one or more processors 108', cause data processing unit 106 at least to perform the selection of the single photon avalanche detector elements 10, and the determination of the values corresponding to time-of-flights.

In an embodiment, time-gating may be utilized in detections. The time gating may be adaptive. The time gating may be used to prevent detections in a range T0 to T1, where T0 means a transmission moment of an optical pulse to a field-of-illumination, and T1 means a moment after that, for example.

The time gating may be used to allow detections in a range T2 to T3, where T2 means a moment after a transmission of an optical pulse to a field-of-illumination and T3 is another moment, which is later than T2, after a transmission of an optical pulse to a field-of-illumination, for example.

The time gating may be used to prevent detections after a moment T4, where T4 means a moment after a transmission of an optical pulse to a field-of-illumination, for example. In this manner, random errors and undesired reflections from environment may be avoided, because the distance which is imaged is limited.

In an embodiment, a quenching circuit may be used to allow a quick recovery for the single photon avalanche detector elements 10. The dead time of the single photon avalanche detector elements 10 can be shortened or eliminated using a quenching circuit which may be active or passive. A passive quenching circuit may be as simple as a resistor coupled to the detecting element. The passive circuit causes self-quenching of the detector element. An active quenching circuit comprises at least one active component like a transistor. The active quenching circuit detects the breakdown of a single photon avalanche detector element and outputs a suitably timed electrical quenching pulse to the single photon avalanche detector element for recovering the single photon avalanche detector element quickly back to the detecting state. In this manner, if a single photon avalanche detector element 10 detects a random or undesired reflection soon after a transmission moment of an optical pulse, the single photon avalanche detector element 10 may still also detect a real or desired object. The TDC 410 may also be a multi-hit TDC, which allows timings for all detected reflections of a single optical pulse, the detections being performed by the same single photon avalanche detector element 10.

Although Figures 3 and 4 show that stripes 402 to 406 are at least approximately equally spaced, the stripes 402 to 406 may also be unequally spaced. In an example, using a plurality of stripes 402 to 406, for example 16 stripes, the stripes that are in the middle may have a shorter distance therebetween than the outermost stripes. Of course, the spacing may also be opposite.

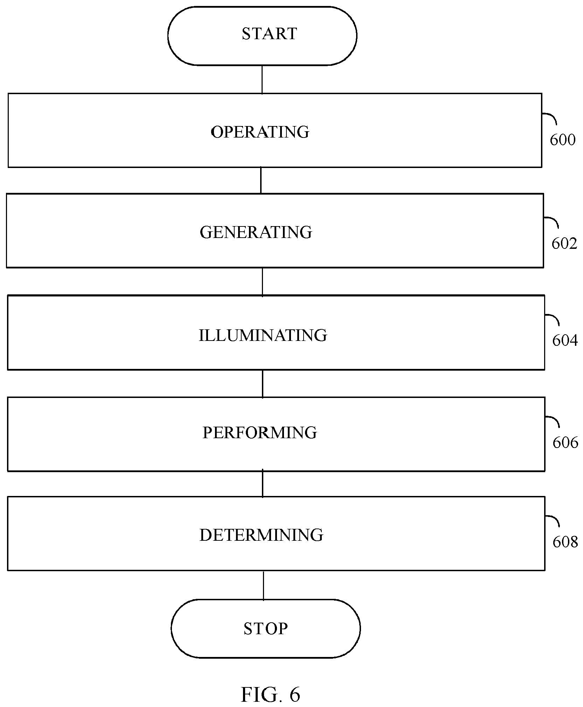

Figure 6 illustrates an example of a method of performing range imaging. In step 600, a plurality of a receiver's 102 single photon avalanche detector elements 10 arranged two-dimensionally in a Geiger mode are operated.

In step 602, optical pulses 110 are generated repeatedly by a semiconductor laser transmitter 100, a single optical pulse of the optical pulses 110 being output as an optical beam 400 with one or more stripes 402 to 406, the stripes 402 to 406 of the optical beams 400 being parallel, one above another, and separate from each other.

In step 604, a detector element configuration of the plurality of the single photon avalanche detector elements 10 is illuminated by a stripe of an optical beam of the optical beams 400, which are reflected from one or more objects 112 within a field-of-view 152, a field-of-illumination 150 of the semiconductor transmitter 100 and the field-of-view 152 of the receiver 102 being overlapping.

In step 606, a data processing unit 106 performs for an optical pulse of the optical pulses 110 and synchronously with the optical pulses 110 repeatedly generated, a selection of single photon avalanche detector elements 10 of one or more of the detector element configurations 300 to 304 in response to generation of one or more of the stripes 402 to 406 of said optical pulse that illuminate the one or more of the detector element configurations 300 to 302.

In step 608, the data processing unit 106 determines values corresponding to time-of-flights of said optical pulse 110 based on electrical signals from the single photon avalanche detector elements 10 of the selection for performing range imaging.

The method shown in Figure 6 may be implemented as a logic circuit solution or computer program. The computer program may be placed on a computer program distribution means for the distribution thereof. The computer program distribution means is readable by a data processing device, and it encodes the computer program commands, carries out the measurements and optionally controls the processes on the basis of the measurements.

It will be obvious to a person skilled in the art that, as technology advances, the inventive concept can be implemented in various ways. The invention and its embodiments are not limited to the example embodiments described above but may vary within the scope of the claims.

## Claims

1. A range imaging apparatus comprises a semiconductor laser transmitter (100), a receiver (102), and a data processing unit (106), a field-of-illumination (150) of the semiconductor transmitter (100) and a field-of-view (152) of the receiver (102) being overlapping;
the receiver (102) comprises a plurality of single photon avalanche detector elements (10) arranged two-dimensionally and configured to operate in a Geiger mode;
the semiconductor laser transmitter (100) is configured to generate optical pulses (110) repeatedly, a single optical pulse of the optical pulses (110) being output as an optical beam (400) with one or more stripes (402, 404, 406), the stripes (402 to 406) of the optical beams (400) being parallel, one above another, and separate from each other, **characterized in that**
a stripe of an optical beam of the optical beams (400), which are reflected from one or more objects (112) within the field-of-view (152), is configured to illuminate a detector element configuration (300, 302, 304) of the plurality of the single photon avalanche detector elements (10), the detector element configuration (300 to 304) comprising a single row of the single photon avalanche detector elements (10) for concentrating optical power of each optical pulse to a minimum number of single photon avalanche detector elements (10), and for determining a resolution of the range imaging in a direction of the a row of the single photon avalanche detector elements (10) with a density of the plurality of the single photon avalanche detector elements (10) in said direction; and
the data processing unit (106) is, synchronously with the optical pulses (110) repeatedly generated, configured to perform a selection of single photon avalanche detector elements (10) of one or more of the detector element configurations (300 to 304) in response to a generation of an optical pulse (110) that is configured to illuminate one or more of the detector element configurations (300 to 304) with the one or more of the stripes (402 to 406), and determine values corresponding to time-of-flights of said optical pulse (110) based on electrical signals from the single photon avalanche detector elements (10) of the selection for performing range imaging.

2. The range imaging apparatus of claim 1, **characterized in that** a density of the plurality of the single photon avalanche detector elements (10) in a first direction is configured to determine a resolution of the range imaging in said first direction, and a density of the stripes (402 to 406) in a direction perpendicular to a longitudinal direction of the stripes (402 to 406) is configured to determine a resolution of the range imaging in a second direction, the second direction being orthogonal to the first direction.

3. The range imaging apparatus of claim 1, **characterized in that** the density of the plurality of the single photon avalanche detector elements (10) is higher than the density of the stripes (402 to 406) in the second direction.

4. The range imaging apparatus of claim 1, **characterized in that** a detector element configuration of the detector element configurations (300 to 304) comprises a one-dimensional row of the single photon avalanche detector elements (10).

5. The range imaging apparatus of claim 1, **characterized in that** a detector element configuration of the detector element configurations (300 to 302) comprises two or more rows of the single photon avalanche detector elements (10) in a two-dimensional configuration.

6. The range imaging apparatus of claim 1, **characterized in that** the semiconductor laser transmitter (100) is configured to provide a temporal sequence of the stripes (402 to 406) to the field-of-illumination (150) such that the semiconductor laser transmitter (100) is configured to direct a number of the stripes (402 to 406) to a same number of the detector element configurations (300 to 304) through a reflection from the one or more objects (112) at each step of the sequence, and the data processing unit (106) is configured to select, at any step of the sequence, one or more of the detector element configurations (300 to 304) in response to stripes (402 to 406) directed thereon.

7. The range imaging apparatus of claim 6, **characterized in that** the semiconductor laser transmitter (100) is configured to direct a number of the stripes (402 to 406) to a same number of the detector element configurations (300 to 304) at at least one moment such that the number is less than a total number (S) of stripes (402 to 406).

8. The range imaging apparatus of claim 1, **characterized in that** the semiconductor laser transmitter (100) is configured to output a total number (S) of stripes (402 to 406) at a time.

9. The range imaging apparatus of claim 1, **characterized in that** the data processing unit (106) comprises a one or more processors (108'); and one or more memories (108") including computer program code;
the one or more memories (108") and the computer program code configured to, with the one or more processors (108'), cause data processing unit (106) at least to perform the selection of the single photon avalanche detector elements (10), and the determination of the values corresponding to time-of-flights.

10. A method of performing range imaging, the method comprising
operating (600) a plurality of a receiver's (102) single photon avalanche detector elements (10) arranged two-dimensionally in a Geiger mode;
generating (602), by a semiconductor laser transmitter (100), optical pulses repeatedly, a single optical pulse of the optical pulses (110) being output as an optical beam (400) with one or more stripes (402 to 406), the stripes (402 to 406) of the optical beams being parallel, one above another, and separate from each other, **characterized by**
illuminating (604) a detector element configuration (300 to 304) of the plurality of the single photon avalanche detector elements (10) by a stripe of an optical beam of the optical beams (400), which are reflected from one or more objects (112) within a field-of-view (152), a field-of-illumination (150) of the semiconductor transmitter (100) and the field-of-view (152) of the receiver (102) being overlapping, the detector element configuration (300 to 304) comprising a single row of the single photon avalanche detector elements (10) for concentrating optical power of each optical pulse to a minimum number of single photon avalanche detector elements (10), and for determining a resolution of the range imaging in a direction of the a row of the single photon avalanche detector elements (10) with a density of the plurality of the single photon avalanche detector elements (10) in said direction;
performing (606), by a data processing unit (106) for an optical pulse of the optical pulses (110) and synchronously with the optical pulses (110) repeatedly generated, a selection of single photon avalanche detector elements (10) of one or more of the detector element configurations (300 to 304) in response to a generation of said optical pulse that illuminate one or more of the detector element configurations (300 to 304) with one or more of the stripes (402 to 406); and
determining (608), by the data processing unit (106), values corresponding to time-of-flights of said optical pulse (110) based on electrical signals from the single photon avalanche detector elements (10) of the selection for performing range imaging.
